# DEMANDE DE BREVET EUROPEEN

(11) **EP 1 958 818 A1**
(43) Date de publication de la demande: **20.08.2008**
(21) Numéro de dépôt: 08300085.1
(22) Date de dépôt: 12.02.2008
(51) Int. Cl.: B60N 2/46

(54) **Dispositif de guidage du pivotement d'un accoudoir à butée escamotable**

(30) Priorité: 13.02.2007 FR 0701012
(71) Demandeur: Renault SAS, 92100 Boulogne Billancourt (FR)
(72) Inventeur: Riou, Jean-Christophe, 78640 Villiers Saint Frederic (FR)

(57) **Abrégé**

L'invention concerne un dispositif de guidage du pivotement d'un accoudoir pour siège de véhicule automobile, ledit accoudoir comportant un axe de pivotement (2) et un doigt de guidage (5) parallèle à l'axe de pivotement, le dispositif de guidage comportant une platine (10) pourvue d'un orifice destiné à recevoir l'axe de pivotement de l'accoudoir à rotation, et d'un rail de guidage (11) destiné à recevoir et guider le doigt de guidage (5) lors de la rotation de l'accoudoir entre une position d'utilisation et une position relevée, caractérisé en ce que la platine (10) est équipée d'au moins une butée escamotable (12) mobile entre une position de blocage du doigt de guidage (5) et une position escamotée correspondante, ladite position de blocage correspondant à la position d'utilisation ou à la position relevée de l'accoudoir et étant telle que le doigt de guidage est bloqué à distance d'une extrémité du rail de guidage, et ladite position escamotée permettant au doigt de guidage de poursuivre sa course en direction de ladite extrémité du rail de guidage.

## Description

L'invention concerne un dispositif de guidage du pivotement d'un accoudoir à butée escamotable, notamment pour un accoudoir de siège de véhicule automobile.

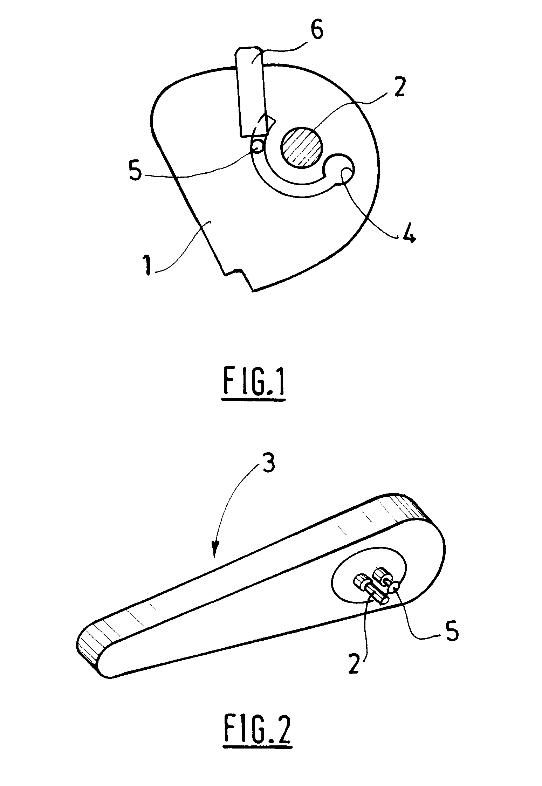

Certains véhicules possèdent des sièges équipés d'accoudoirs articulés. La figure 1 représente schématiquement un dispositif de guidage en pivotement de l'accoudoir représenté sur la figure 2. Ce dispositif de guidage en pivotement est formé d'une platine 1 pourvue d'un orifice destiné à recevoir à rotation un axe 2 solidaire de l'accoudoir 3, et d'un rail de guidage 4 destiné à recevoir et à guider en déplacement un doigt de guidage 5 solidaire de l'accoudoir et parallèle à l'axe de rotation, tel que visible sur la figure 2. Le doigt de guidage 5 et l'axe de rotation 2 sont placés l'un à côté de l'autre sur l'accoudoir, à proximité d'une extrémité de ce dernier, le doigt de guidage étant placé le plus près de l'extrémité de l'accoudoir. La longueur du rail de guidage 4, en forme d'arc de cercle, est choisie de manière à autoriser le pivotement de l'accoudoir entre une position d'utilisation sensiblement horizontale et une position relevée, généralement sensiblement verticale. En général, la position relevée correspond à une position extrême du doigt de guidage dans le rail, tandis que la position d'utilisation est obtenue au moyen d'une butée 6 bloquant le doigt de guidage 5 dans le rail, au niveau de la position souhaitée de l'accoudoir. Cette butée 6 se présente sous la forme d'une languette soudée à la platine 1.

Ce dispositif présente toutefois l'inconvénient d'être fragile en cas de mauvaise utilisation de l'accoudoir. On observe ainsi souvent une rupture du doigt de guidage lorsque l'utilisateur exerce une pression importante sur l'accoudoir vers le bas, par exemple pour s'extraire du véhicule. Une rupture du doigt de guidage est également parfois observée lorsque les passagers arrière tirent sur l'accoudoir en position relevée pour s'extraire du véhicule. Dans les deux cas, le doigt de guidage est en appui contre la butée ou une extrémité du rail de guidage, de sorte que des pressions exercées répétées conduisent à une rupture au niveau du petit diamètre du doigt de guidage.

Une solution permettant d'éviter la rupture du mécanisme serait de renforcer les pièces, d'augmenter les épaisseurs, d'ajouter des renforts. Une telle solution n'est toutefois pas satisfaisante car elle engendre une augmentation de la masse et du coût lié à la fonction.

L'invention vise à pallier ces inconvénients en proposant un dispositif de guidage du pivotement d'un accoudoir équipé d'une butée escamotable apte à supporter des efforts dus à une mauvaise utilisation de l'accoudoir dans une de ses positions extrêmes d'utilisation, à savoir en position relevée ou en position d'utilisation.

Le document JP 2005-287724 A décrit une came de verrouillage escamotable pour un accoudoir de siège de véhicule automobile. Un rail de guidage est prévu sur le châssis de l'accoudoir pour recevoir et guider un doigt de guidage lors du pivotement de l'accoudoir. Ce doigt de guidage est solidaire du châssis du dossier du siège. La came escamotable est montée à rotation sur le châssis de l'accoudoir de manière à venir en prise avec le doigt de guidage afin de maintenir l'accoudoir dans la position relevée. La came est maintenue dans cette position de verrouillage au moyen d'un ressort en traction fixé d'une part à l'extrémité de la came distante de l'extrémité bloquant le doigt, et d'autre part à l'accoudoir. Le déblocage du doigt de verrouillage est obtenu en exerçant une traction sur l'accoudoir suffisante pour vaincre la force du ressort de la came et libérer le doigt de verrouillage. Ce dispositif ne permet toutefois pas d'éviter une rupture du doigt de guidage en cas de mauvaise utilisation de l'accoudoir. De plus, en cas de rupture du doigt de guidage, il est nécessaire de changer la partie correspondante du châssis du dossier du siège, ce qui peut s'avérer long et coûteux.

Afin de remédier à ces inconvénients, l'objet de l'invention concerne un dispositif de guidage du pivotement d'un accoudoir pour siège de véhicule automobile, ledit accoudoir comportant un axe de pivotement et un doigt de guidage parallèle à l'axe de pivotement, le dispositif de guidage comportant une platine pourvue d'un orifice destiné à recevoir l'axe de pivotement de l'accoudoir à rotation, et d'un rail de guidage destiné à recevoir et guider le doigt de guidage lors de la rotation de l'accoudoir entre une position d'utilisation et une position relevée, caractérisé en ce que la platine est équipée d'au moins une butée escamotable mobile entre une position de blocage du doigt de guidage et une position escamotée correspondante, ladite position de blocage correspondant à la position d'utilisation ou à la position relevée de l'accoudoir et étant telle que le doigt de guidage est bloqué à distance d'une extrémité du rail de guidage, et ladite position escamotée permettant au doigt de guidage de poursuivre sa course en direction de ladite extrémité du rail de guidage.

Ainsi, en cas de mauvaise utilisation de l'accoudoir, la butée va s'escamoter, autorisant la poursuite du pivotement de l'accoudoir, de sorte que le doigt de verrouillage de subit plus de contraintes importantes. En réalisant un rail de guidage suffisamment long pour éviter que le doigt de guidage vienne en butée contre une extrémité du rail alors qu'une pression importante est exercée contre l'accoudoir, il est possible de réduire, voire supprimer, tout risque de rupture du doigt de verrouillage.

Avantageusement, la platine est équipée de deux butées escamotables pour le blocage du doigt de guidage dans la position d'utilisation et la position relevée respectivement.

Dans un mode de réalisation particulier, la butée escamotable est formée d'un bras comportant une extrémité montée à rotation sur la platine, et une extrémité libre présentant un bord conformé de manière à bloquer le déplacement du doigt de guidage dans le rail de guidage en direction de l'extrémité la plus proche dudit rail, et la butée est reliée à un ressort monté sur la platine de manière à exercer une force prédéterminée à l'encontre du déplacement de la butée de sa position de blocage à sa position escamotée.

Avantageusement, l'extrémité libre de la butée présente un autre bord conformé de manière à permettre le déplacement du doigt de guidage dans le rail de guidage en s'éloignant de ladite extrémité proche du rail de guidage.

La butée peut ainsi facilement être ramenée dans sa position initiale en permettant le retour de l'accoudoir vers sa position relevée ou sa position d'utilisation, selon la position de la butée.

En particulier, la force d'escamotage de la butée sera tarée en choisissant un ressort adéquat. On peut ainsi choisir une force d'escamotage suffisamment élevée pour autoriser une utilisation normale de l'accoudoir, mais suffisamment faible pour éviter l'application de contraintes trop élevées sur le doigt de guidage et la fragilisation de ce dernier. Notamment, on pourra choisir des forces de tarage différentes du ressort selon la position de la butée.

De préférence, le ressort est un ressort à spirale enroulé autour de l'axe de rotation de la butée sur la platine, et dont une extrémité est solidaire de la platine et l'autre extrémité est solidaire de la butée.

L'invention est maintenant décrite en référence aux dessins annexés, non limitatifs, dans lesquels :
- la figure 1 est une représentation schématique d'un dispositif connu de guidage en pivotement d'un accoudoir ;
- la figure 2 est une représentation en perspective d'un accoudoir connu ;
- les figures 3 et 4 sont des représentations schématiques d'un dispositif de guidage selon l'invention, la butée étant en position de blocage et en position escamotée, respectivement.

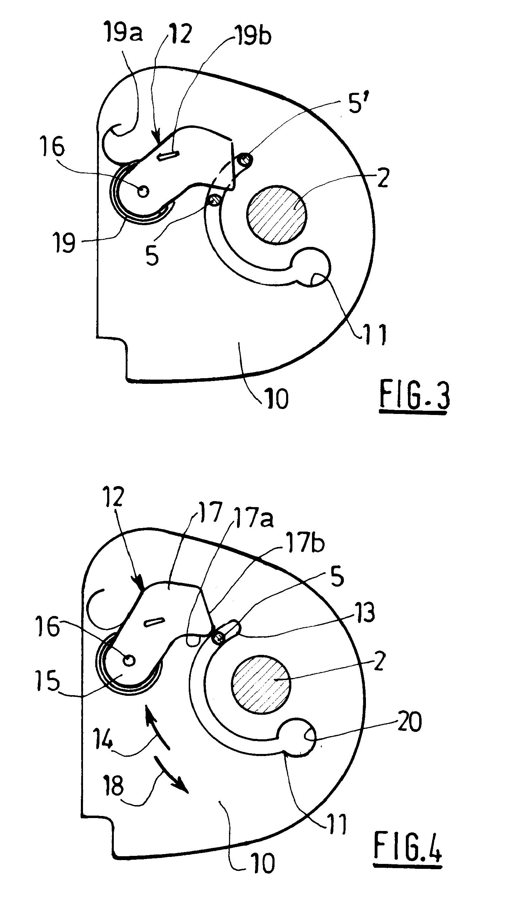

Le dispositif de guidage selon l'invention représenté sur les figures 3 et 4 est destiné à assurer le pivotement d'un accoudoir du type de celui représenté sur la figure 2. Cet accoudoir 3 comprend un axe de pivotement 2 et un doigt de guidage 5 faisant saillie de la face interne de l'accoudoir, et parallèles entre eux, tel que précédemment décrit.

Le dispositif de guidage représenté est formé d'une platine 10 pourvue d'un orifice destiné à recevoir à rotation l'axe de pivotement 2 de l'accoudoir.

Une telle platine est destinée à être solidarisée au châssis du dossier d'un siège de véhicule automobile destiné à recevoir un accoudoir.

La platine 10 est pourvue d'un rail de guidage 11 destiné à recevoir et guider le doigt de guidage 5 lors de la rotation de l'accoudoir entre une position d'utilisation et une position relevée. La position d'utilisation correspond à une position sensiblement horizontale, tandis que la position relevée est sensiblement verticale et correspond généralement à une position dans laquelle l'accoudoir s'étend le long du dossier du siège. Ce rail de guidage 11 est une lumière traversant la platine 10, sensiblement en forme d'arc de cercle.

Selon l'invention, la platine 10 est équipée d'une butée escamotable 12, mobile entre une position de blocage du doigt de guidage 5 tel que visible sur la figure 3 et une position escamotée correspondante représentée sur la figure 4.

Dans l'exemple représenté, la butée 12 est montée de sorte que sa position de blocage corresponde à la position d'utilisation de l'accoudoir, le doigt de guidage 5 étant bloqué dans une position distante de l'extrémité 13 du rail de guidage, située à proximité de la position de blocage de la butée.

La butée escamotable 12 est formée d'un bras présentant une extrémité 15 montée à rotation sur la platine au moyen d'un axe de rotation 16, et une extrémité libre 17 conformée de manière à bloquer le déplacement du doigt de guidage.

Dans l'exemple, l'extrémité libre 17 présente un bord 17a conformé de manière à bloquer le déplacement du doigt de guidage 5 dans le rail de guidage en direction de l'extrémité 13 la plus proche dudit rail, et un autre bord 17b conformé de manière à permettre le déplacement du doigt de guidage dans le rail de guidage en s'éloignant de ladite extrémité proche du rail de guidage (flèche 18).

En outre, la butée 12 est reliée à un ressort 19 monté sur la platine de manière à exercer une force prédéterminée à l'encontre du déplacement de la butée de sa position de blocage à sa position escamotée.

Ce ressort 19 est un ressort à spirale enroulé autour de l'axe de rotation 16 de la butée sur la platine, et dont une extrémité 19a est solidaire de la platine et l'autre extrémité 19b est solidaire de la butée.

Ainsi, le blocage du doigt de guidage est réalisé essentiellement par la force du ressort, le bord 17a venant en appui contre le doigt 5, ce bord 17a étant toutefois conformé de manière à autoriser le déplacement du doigt de guidage 5 lorsqu'une force contrant la force du ressort 19 est exercée sur l'accoudoir.

La butée escamotable fonctionne de la manière suivante. En position d'utilisation de l'accoudoir, le doigt de guidage 5 est en appui contre le bord 17a de la butée 12, laquelle est maintenue dans cette position par l'action du ressort 19.

Lorsqu'une pression suffisamment importante pour contrer la force du ressort 19 est exercée sur le dessus de l'accoudoir, en direction du bas, la butée escamotable pivote autour de son axe 16 laissant ainsi le doigt de guidage 5 se déplacer suivant la direction de la flèche 14 (figure 4) jusqu'à la position 5' représentée figure 3. Après le passage du doigt de guidage, la butée 12, sous l'action du ressort 19, retourne automatiquement à sa position de blocage initiale représentée figure 3.

Une pression exercée sur l'accoudoir pour le relever conduit au pivotement de la butée 12 en direction de sa position d'escamotage, par appui du doigt de guidage 5 sur le bord 17b de la butée, permettant ainsi le déplacement du doigt en sens inverse suivant la direction de la flèche 18. Un retour aisé de l'accoudoir dans sa position d'utilisation est ainsi obtenu.

Le dispositif selon l'invention présente l'avantage d'être simple à réaliser et mettre en oeuvre, et peu coûteux.

Il peut en outre être également mis en oeuvre au niveau de la position relevée de l'accoudoir en prévoyant une seconde butée à proximité de l'autre extrémité 20 du rail de guidage.

## Revendications

1. Dispositif de guidage du pivotement d'un accoudoir (3) pour siège de véhicule automobile, ledit accoudoir (3) comportant un axe de pivotement (2) et un doigt de guidage (5) parallèle à l'axe de pivotement, le dispositif de guidage comportant une platine (10) pourvue d'un orifice destiné à recevoir l'axe de pivotement de l'accoudoir à rotation, et d'un rail de guidage (11) destiné à recevoir et guider le doigt de guidage (5) lors de la rotation de l'accoudoir entre une position d'utilisation et une position relevée, **caractérisé en ce que** la platine (10) est équipée d'au moins une butée escamotable (12) mobile entre une position de blocage du doigt de guidage (5) et une position escamotée correspondante, ladite position de blocage correspondant à la position d'utilisation ou à la position relevée de l'accoudoir et étant telle que le doigt de guidage est bloqué à distance d'une extrémité du rail de guidage, et ladite position escamotée permettant au doigt de guidage de poursuivre sa course en direction de ladite extrémité du rail de guidage.

2. Dispositif de guidage selon la revendication 1, **caractérisé en ce que** la platine est équipée de deux butées escamotables pour le blocage du doigt de guidage dans la position d'utilisation et la position relevée respectivement.

3. Dispositif de guidage selon la revendication 1 ou 2, **caractérisé en ce que** la butée escamotable (12) est formée d'un bras comportant une extrémité (15) montée à rotation sur la platine, et une extrémité libre (17) présentant un bord (17a) conformé de manière à bloquer le déplacement du doigt de guidage (5) dans le rail de guidage (11) en direction de l'extrémité la plus proche dudit rail, et **en ce que** la butée est reliée à un ressort (19) monté sur la platine de manière à exercer une force prédéterminée à l'encontre du déplacement de la butée de sa position de blocage à sa position escamotée.

4. Dispositif de guidage selon la revendication 3, **caractérisé en ce que** l'extrémité libre de la butée présente un autre bord (17b) conformé de manière à permettre le déplacement du doigt de guidage dans le rail de guidage en s'éloignant de ladite extrémité proche du rail de guidage.

5. Dispositif de guidage selon la revendication 3 ou 4, **caractérisé en ce que** le ressort (19) est un ressort à spirale enroulé autour de l'axe de rotation de la butée sur la platine, et dont une extrémité (19a) est solidaire de la platine et l'autre extrémité (19b) est solidaire de la butée.
